Europäisches Patentamt

European Patent Office

Office européen des brevets

(19)

(11) Numéro de publication: **0 054 000**
**B1**

(12) **FASCICULE DE BREVET EUROPEEN**

(45) Date de publication du fascicule du brevet:
13.11.85

(21) Numéro de dépôt: 81810473.9

(22) Date de dépôt: 30.11.81

(51) Int. Cl.⁴: **G 01 G 19/12**

(54) **Dispositif de mesure de la charge utile et de la charge sur les essieux d'un camion.**

(30) Priorité: 09.12.80 CH 9066/80

(43) Date de publication de la demande:
16.06.82 Bulletin 82/24

(45) Mention de la délivrance du brevet:
13.11.85 Bulletin 85/46

(84) Etats contractants désignés:
**AT DE FR GB IT SE**

(56) Documents cités:
**FR - A - 2 143 404
FR - A - 2 249 787
FR - A - 2 312 025
GB - A - 991 616
GB - A - 1 310 889
US - A - 3 279 550
US - A - 3 603 418
US - A - 3 927 724
US - A - 4 020 911
US - A - 4 102 031**

**Messelektronik nichtelektrischer Grössen, Teil 3, R. KAUTSCH, 1. Halbjahr 1974, p. 144, 158, 159**

(73) Titulaire: **VIBRO-METER SA, Route de Moncor 4, CH-1700 Fribourg (CH)**

(72) Inventeur: **Loos, Horst-Rudolf, Dr., Moncor 13, CH-1752 Villars-sur-Glâne (CH)**
Inventeur: **Dupre, Bernhard, Route du Centre 33, CH-1723 Marly (CH)**

(74) Mandataire: **Steiner, Martin et al, c/o AMMANN PATENTANWAELTE AG BERN Schwarztorstrasse 31, CH-3001 Bern (CH)**

BUNDESDRUCKEREI BERLIN

## Description

La présente invention concerne un dispositif de mesure de la charge utile de la charge sur les essieux d'un camion comprenant un chassis et une benne, ladite mesure étant effectuée par des capteurs montés entre ledit chassis et ladite benne.

Le document »Messelektronik nichtelektrischer Größen«, Teil 3 (KAUTSCH/1. Halbjahr 1974), p. 144, 158, 159 expose les principes généraux relatifs aux précautions à prendre lors du montage de capteurs de force afin d'augmenter la précision de la mesure. Il ne divulgue cependant pas les mesures spécifiques décrites dans la présente invention pour assurer une mobilité de la benne relativement au chassis avec un nombre suffisant de degrés de liberté pour que les capteurs soient soumis exclusivement aux contraintes résultant du poids de la benne et de la charge utile du camion.

Selon le brevet américain US-A-3 927 724, on connaît un appareil pour retenir une benne sur le chassis d'un véhicule avec un dispositif de presée incorporé. La disposition de l'appareil permet d'éviter ou de diminuer les contraintes de torsion et les forces d'allongement sur les capteurs de force utilisés dans les systèmes de pesage des véhicules. Toutefois, le système ne permet pas d'éviter des contraintes de flexion dans un plan perpendiculaire aux axes des roues, ces contraintes pouvant fausser la mesure du poids de la charge utile.

Le brevet US-A-3 279 550 décrit un système de mesure de la charge d'un camion dans lequel des cellules de charge sont placés entre le chassis porteur de charge et le chassis du camion, à chaque coin du chassis porteur de charge. La partie supérieure de la cellule de charge est fixée au chassis porteur de charge et la partie inférieure de la cellule au chassis du camion. Les deux parties sont reliées ensemble par des plaques soudées permettant une flexion limitée de la partie supérieure de la cellule de charge. La cellule de charge est montée entre un canal supérieur et un canal inférieur, au milieu de ces canaux. Ceci permet d'éliminer les effets des forces latérales et de cisaillement sur les cellules de charge, ces forces étant transmises au chassis du camion par les plaques soudées. La seule force agissant sur la cellule de charge est dans la direction de l'axe de cette cellule. Toutefois, le système ne permet pas un déplacement axial du chassis porteur de charge le long de l'axe longitudinal du camion ni le déplacement le long d'un axe perpendiculaire à ce dernier. L'utilisation de quatre cellules de charge ne permet pas une rotation du chassis porteur de charge autour de l'axe longitudinal du camion.

En conséquence, le but de la présente invention est un dispositif de mesure de précision de la charge utile et de la charge sur les essieux d'un camion dans lequel les capteurs de force sont soumis exclusivement aux contraintes résultantes du poids de la benne et de la charge utile supportée par cette benne, et ceci indépendamment de l'endroit où est disposée la charge utile dans la benne et, à l'intérieur de certaines limites, de l'inclinaison du camion par rapport à l'horizontale.

Pour atteindre ce but le dispositif selon l'invention est réalisé comme décrit dans la revendication 1.

Par le fait que les moyens de liaison fixés à la benne transmettant les forces aux forces aux capteurs permettant à ceux-ci de coulisser et tourner librement et que les capteurs sont montés sur rotules présentant un jeu par rapport aux moyens de liaison, il existe entre le chassis et la benne une mobilité avec un nombre suffisant de degrés de liberté pour que les capteurs ne soient soumis qu'aux contraintes dues au poids de la benne et de la charge utile du camion, et ceci indépendamment de l'endroit où est disposée la charge utile dans la benne et, dans certaines limites, de l'inclinaison du camion par rapport à l'horizontale.

L'invention va être décrite ci-après à titre d'exemple et à l'aide du dessin, dans lequel:

— la fig. 1 montre la disposition des capteurs dans un camion selon une première forme d'exécution du dispositif selon l'invention,
— la fig. 2 montre une coupe selon la ligne E-E de la fig. 1,
— la fig. 3 montre une coupe selon la ligne B-B de la fig. 1,
— la fig. 4 montre le montage des capteurs du dispositif selon l'invention,
— la fig. 5 montre l'ensemble de capteurs dans un système d'axes de coordonnées rectangulaires,
— la fig. 6 montre les forces de pression agissant sur les capteurs,
— la fig. 7 montre une vue schématique de la benne et du chassis du camion correspondant à une deuxième forme d'exécution du dispositif selon l'invention,
— la fig. 8 montre la disposition des capteurs selon une troisième forme d'exécution du dispositif selon l'invention,
— la fig. 9 montre la disposition des forces et des bras de levier permettant de calcul de la charge totale utile et des forces sur les essieux,
— la fig. 10 montre le schéma-bloc du circuit électronique correspondant à la première forme d'exécution de l'invention, et
— la fig. 11 montre le montage des capteurs frontaux de la fig. 8

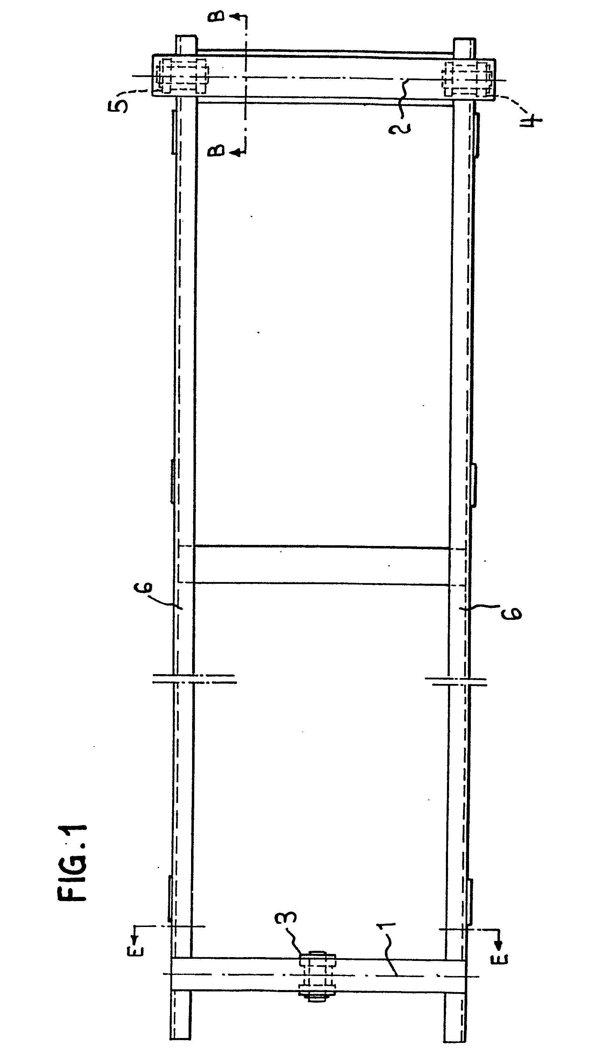

La figure 1 montre une vue en plan du chassis d'un camion, dans lequel 1 et 2 représentent respectivement un axe avant et un axe arrière sur lesquels sont montés trois capteurs cylindriques 3, 4 et 5. L'axe avant 1 est celui du support de la benne et l'axe arrière 2 est celui autour duquel la benne peut basculer. Les capteurs 4 et 5 sont montés symétriquement le long de l'axe 2 de manière que leurs axes coincident avec ce dernier. Leur écartement est le même que celui des profilés du chassis 6 du camion. Le capteur 3 est monté au milieu de l'axe du support avant de la benne et son axe, coincidant avec l'axe longitudinal du chassis, est perpendiculaire à l'axe 1. Par conséquent, dans la forme d'exécution de la fig. 1, le capteur avant 3 est disposé perpendiculairement par rapport aux capteurs arrières 4 et 5.

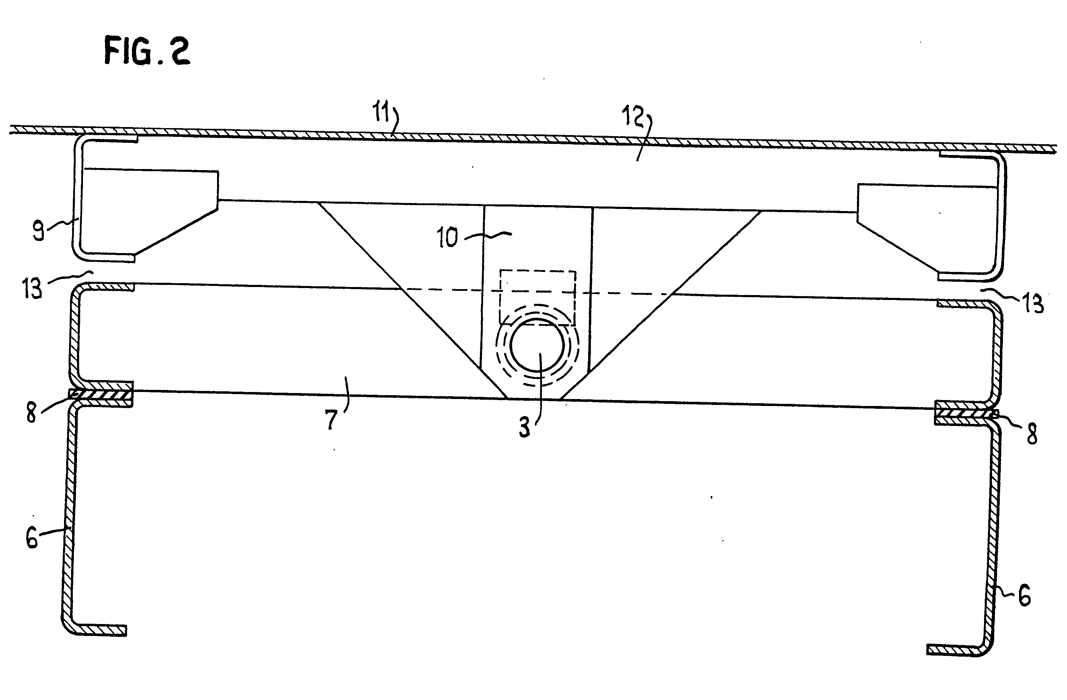

La figure 2 montre une coupe selon la ligne E-E de la figure 1. Le chassis 6 du camion supporte un chassis intermédiaire 7 par un anneau rectangulaire 8 en matériau élastique pour donner une certaine mobilité au chassis intermédiaire. Ce dernier est destiné à supporter les capteurs de force 3, 4 et 5 et son installation dans le camion est prévue pour les véhicules déjà existants, sur lesquels on désire introduire le dispositif selon l'invention. Par contre, dans le cas où il est prévu d'introduire le dispositif en question lors de la conception d'un nouveau type de vèhicule le chassis de ce dernier peut être conçu de manière à supporter directement les capteurs de force, ce qui élimine la nécessité de prévoir un chassis intermédiaire. Au-dessus du chassis intermédiaire 7 se trouve le chassis 9 de la benne. La figure 2 montre que la plaque de base 11 de la benne repose sur un tube 12, par exemple de section rectangulaire, sur lequel sont soudées deux plaques support 10 portant chacune une ouverture dans laquelle le capteur peut coulisser axialement. Les plaques support transmettent au capteur les forces exercées par la benne et la charge utile qu'elle supporte. La figure 2 montre que les bords latéraux du chassis 9 de la benne ne reposent par sur le chassis intermédiare 7 mais qu'ils sont séparés de ce dernier par des espaces 13, ce qui permet à la benne de se déformer en effectuant une rotation autor de l'axe du capteur 3 lorsque la charge est placée dans la benne de manière dissymétrique par rapport à l'axe du capteur 3. On évite ainsi des contraintes indésirables de tension sur le capteur 3. La rotation de la benne autor de l'axe 1 est bien entendu limitée par la grandeur des espaces 13.

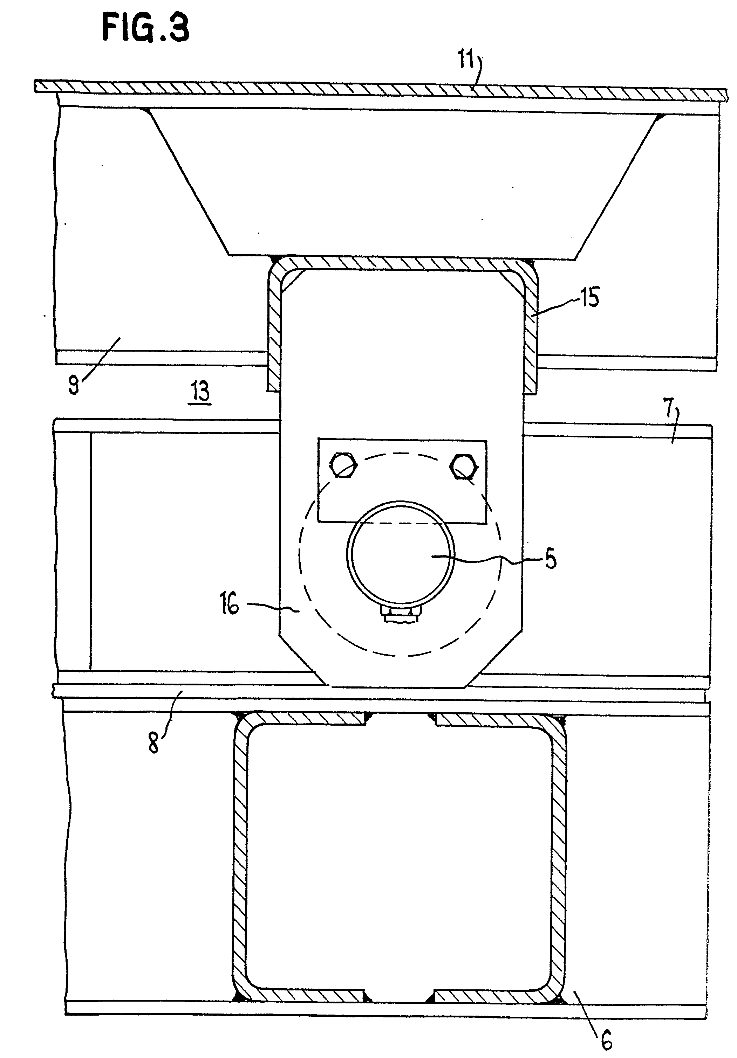

La figure 3 montre une coupe selon la ligne B-B de la figure 1. On reconnait la plaque de base 11 de la benne et l'espace 13 entre le chassis 9 de celle-ci et le chassis intermédiaire 7. Le chassis de la benne porte un profilé 15. Sur ce dernier est soudée une paire de plaques 16 venant appuyer sur les extrémités du capteur 5 afin de transmettre à celui-ci les forces exercées par le poids de la benne et de la charge utile qu'elle supporte. Une deuxième paire de plaques 16, soudées sur le profilé 15, transmettent ces forces au capteur 4. Les plaques 16 ainsi que les plaques 10 de la figure 2 peuvent tourner et glisser sur les capteurs 3, 4 et 5. Dans le cas d'un camion basculant, équippé d'un chassis intermédiaire, le basculement de l'ensemble chassis intermédiaire-benne est assuré par exemple par un piston hydraulique agissant sous le chassis intermédiaire. L'axe autor duquel basculent la benne et le chassis intermédiaire n'est pas représenté. Cette disposition offre l'avantage que poids de ce piston n'est pas mesuré par les capteurs 3, 4 et 5 et que le frottement entre benne et chassis intermédiaire n'influence pas la mesure des poids de la benne et de la charge utile. On évite ainsi toute erreur de mesure.

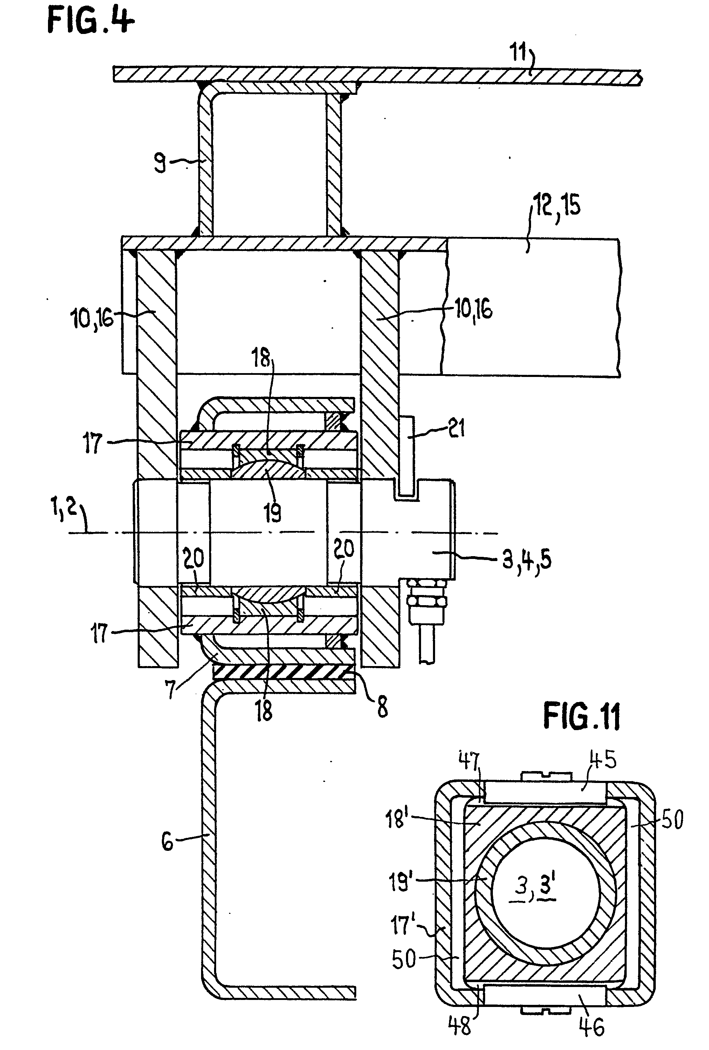

La figure 4 montre le principe de montage des capteurs 3, 4 et 5 dans le chassis intermédiaire ou, le cas échéant, la chassis du camion. Un tube 17 est soudé au chassis intermédiaire 7. A l'intérieur et au centre de ce tube est chassé un logement ou support de rotule 18. Le support 18 contient une rotule 19 chassée sur le capteur et libre de tourner dans le support 18. Des bagues de distance 20, disposées de part et d'autre de la rotule 19 et montées de manière coulissante sur le capteur permettent un certain déplacement latéral des plaques 10 et 16 par le fait qu'un jeu est prévu d'une part entre les bords extérieurs de bagues 20 et les parois intérieures des plaques 10, 16 et d'autre part entre ces dernières et le tube 17 et le chassis intermédiaire 7. Le capteur est empêché de tourner autor de son axe, relativement aux plaques 10, 16 par une plaquettes 21 fixée à l'une des plaques 10, 16 et venant s'insérer dans une rainure du capteur. Un jeu latéral est prévu entre la plaquette 21 et le capteur pour permettre le déplacement latéral des plaques 10 et 16 sur ce dernier. Grace à la rotule, le capteur peut en outre tourner autor d'un axe perpendiculaire au plan de la figure 4 et autor de son axe 1, 2 par rapport au chassis intermédiaire 7 ou par rapport au chassis 6 du camion si les capteurs sont montés sur celui-ci.

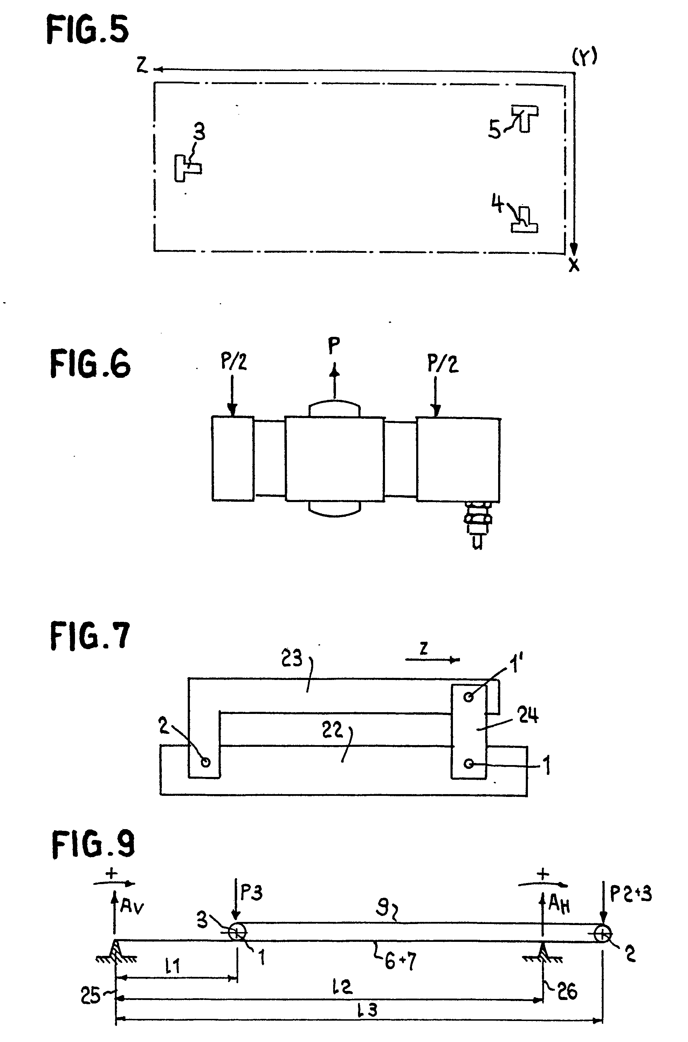

Si l'ensemble des trois capteurs est placé dans un système de coordonnées rectangulaires comme indiqué en figure 5, la construction décrite plus haut donne à la benne les possibilités de mouvement suivantes:

— possibilité d'un mouvement d'allongement linéaire selon l'axe Z,
— possibilité d'un mouvement linéaire de l'arrière de la benne, selon l'axe X,
— possibilité d'un mouvement de rotation autor de l'axe Z, et
— possibilité d'un mouvement de rotation autor de l'axe X.

La benne a donc quatre degrés de liberté. En pratique, les différents mouvements mentionnés ci-dessus se produisent en réponse à des charges utiles non réparties uniformément à la surface de la benne et lorsque le camion est incliné, le plan de la benne n'étant pas horizontal. Grâce au montage sur rotule des capteurs et à leur disposition selon la figure 1, les capteurs ne sont pas soumis en pratique à des contraintes de flexion ni de torsion; ils ne sont soumis qu'à des contraintes de pression P comme indiqué en figure 6. Ceci élimine les contraintes parasites et contribue à augmenter considérablement la précision de la mesure par le fait que les capteurs ne sont soumis exclusivement qu'aux contraintes provoquées par le poids de la benne et de la charge utile. Une bonne précision, de l'ordre de grandeur de 1 à 2%, telle que celle qui est réalisable par le système décrit plus haut offre à l'utilisateur les avantages suivants:

— la charge par essieux étant connue avec une marge d'erreur faible, les contrôles de police sont accélérés et simplifiés, ce qui conduit à un gain de temps,
— la charge utile étant connue avec une marge d'erreur faible, sa taxation correspond au poids effectivement livré à l'utilisateur, ce qui élimine les contestations au sujet du prix à payer et,
— de manière générale, la connaisance de la charge utile transportée donne à l'utilisateur la possibilité de diminuer l'usure du véhicule, des pneus et des freins, ainsi que la consommation de carburant et les réparations; la durée de vie du véhicule est augmentée.

La figure 7 montre, comme variante, une disposition du chassis 22 du camion et de la benne 23 permettant de disposer le capteur avant 3 avec son axe parallèle à l'axe 1, c'est-à-dire à ceux des capteurs 4 et 5. Pour donner, à la benne le même nombre de degrés de liberté que dans le cas précédent, on peut relier, vers l'avant, la benne 23 au chassis 22 par une attache 24 susceptible de tourner autor des axes 1 et 1'.

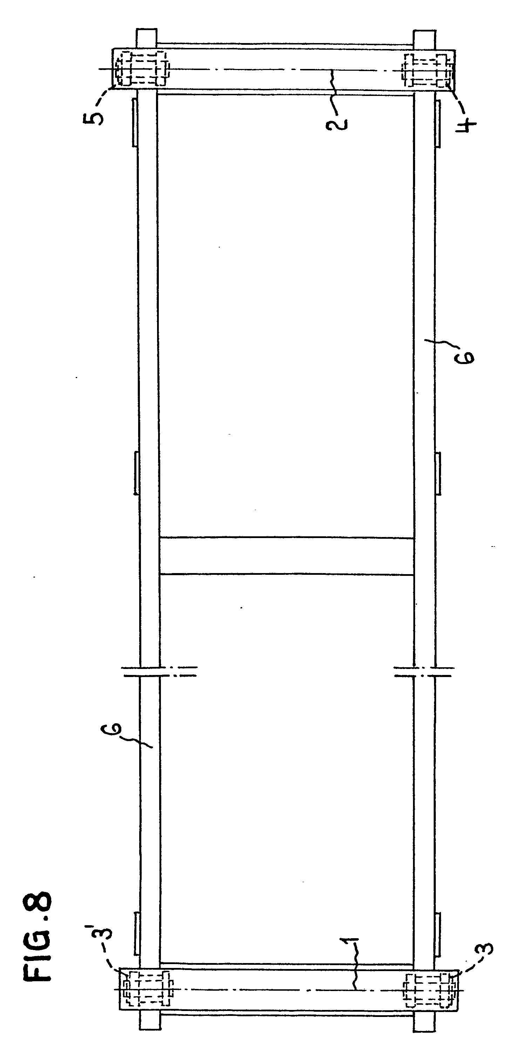

La figure 8 montre que le nombre de capteurs n'est pas obligatoirement limité à trois mais que, sans sortir du cadre de l'invention, et lorsque dans des applications particulières il n'est pas possible de n'utiliser que trois capteurs, la dispositon de la benne et du chassis permet l'utilisation de quatre capteurs 3, 3', 4 et 5. Dans cette forme d'exécution particulière, les capteurs frontaux 3 et 3' sont disposés avec leurs axes parallèles, coincidant avec l'axe avant du camion. Toutefois, sans prendre des mesures particulières pour assurer le même nombre de degrés de liberté à la benne que dans la forme d'exécution de la figure 1, la disposition de la figure 8 limité ce nombre de degrés de liberté à trois au lieu de quatre par le fait que le déplacement linéaire de la benne le long de l'axe Z de la figure 5 n'est plus possible. La figure 11 montre une coupe à travers les capteurs frontaux 3 ou 3', la rotule 19', le logement 18' et le tube 17' de la forme d'exécution de la figure 8. Dans ce cas, le tube 17' a une section rectangulaire ainsi que le logement 18'. Le logement 18' est monté dans le tube 17' par deux clavettes 45 et 46 fixées chacune dans un dégagement du tube 17' et s'engageant de manière coulissante dans deux rainures 47 et 48 du logement 18'. Cette dispositon permet un déplacement de l'axe 1 avec les capteurs 3 et 3' le long de l'axe Z de la figures 5 tout en évitant un déplacement du logement 18' le long de l'axe des capteurs et un déplacement vertical des capteurs. En conséquence, la disposition de la figure 8 avec quatre capteurs a aussi quatre dégrés de liberté comme dans le cas de la forme d'exécution de la figure 1.

Selon une variante de la forme d'exécution de la figure 8, il est aussi possible de disposer les quatre capteurs de manière que les axes des deux capteurs frontaux 3 et 3' soient perpendiculaires à l'axe commun des capteurs arrière 4 et 5.

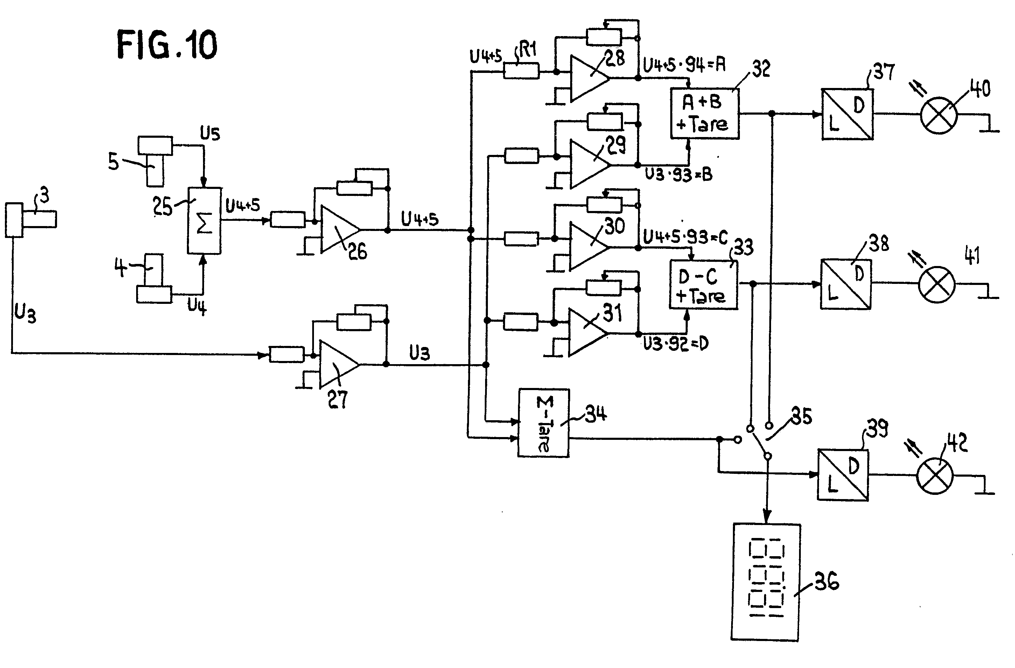

La figure 9 montre, dans le cas de la forme d'exécution selon figure 1, les forces agissant sur les capteurs et la disposition des bras de levier pour le calcul des forces $A_V$ et $A_H$ sur les essieux du véhicule. Sur le capteur avant 3 agit la force $P_3$ et sur l'ensemble des capteurs arrières 4 et 5, la force $P_{4+5}$. La somme

$$P_{total} = P_3 + P_{4+5} \qquad (1)$$

représente le poids de la benne (tare) augmenté de celui de la charge utile. Si la tare a été faite, (1) peut représenter la charge utile sur la benne. A l'aide de la figure 9 on calcule les forces sur les essieux:

avant:

$$A_V = \frac{P_3\,(l_2 - l_1) - P_{4+5}\,(l_3 - l_2)}{l_2} = g_1\,P_3 - g_2\,P_{4+5} \qquad (2)$$

arrière:

$$A_H = \frac{P_3\,l_1 + P_{4+5}\,l_3}{l_2} = g_3\,P_3 + g_4\,P_{4+5} \qquad (3)$$

les relations (1), (2) et (3) peuvent être calculées par un circuit électronique dont le schéma est celui de la figure 10. On admet que les capteurs délivrent par exemple une tension de sortie proportionnelle aux forces P exercées.

La figure 10 montre que le signal du capteur 3 est amplifié dans un amplificateur opérationnel 27 et que la somme $U_{4+5}$, effectuée par le sommateur 25, des signaux des capteurs 4 et 5 est amplifiée dans un amplificateur opérationnel 26. Les amplificateurs opérationnels 28—31 réalisent respectivement les opérations

$$g_4 U_{4+5} = A;\ g_3 U_3 = B;$$
$$g_2 U_{4+5} = C\ et\ g_1 U_3 = D.$$

Le sommateur 32 délivre un signal égal à

$$A + B + tare$$

correspondant à la contribution de la charge utile sur l'essieux arrière, le sommateur 33 un signal

$$D - C + tare$$

correspondant à la contribution de la charge utile sur l'essieux avant et le sommateur 34 la somme

$$U_3 + U_{4+5} - tare$$

0 054 000

qui correspond à la charge utile. Le commutateur 35 permet de brancher l'affichage 36 à volonté sur les sorties des sommateurs 32 (essieux arrière), 33 (essieux avant) et 34 (charge utile). En outre, l'électronique comporte des circuits de surveillance de limite 37 à 39 associés respectivement à des indicateurs de surcharge 40 à 42 afin de prévenir l'utilisateur de toute surcharge indésirable du véhicule.

Ce qui précède montre que le dispositif selon l'invention constitue une solution particulièrement efficace du problème posé, permettant d'atteindre, en particulier, une précision de mesure élevée de la charge utile et de la charge des essieux du véhicule. En outre, le principe décrit ci-dessus peut aussi s'appliquer à des véhicules à trois essieux et à des véhicules à remorque.

**Revendications**

1. Dispositif de mesure de la charge utile et de la charge sur les essieux d'un camion comprenant un chassis (6) et une benne (9), ladite mesure étant effectuée par des capteurs de force (3, 3', 4, 5) montés entre le chassis et la benne, caractérisé en ce que les forces résultant du poids de la benne (9) et de la charge utile sont transmises aux capteurs (3, 3', 4, 5) par des moyens de liaison (10, 16) fixés à la benne (9) dans lesquels les capteurs peuvent coulisser et tourner, et en ce que les capteurs (3, 3', 4, 5) sont assemblés au chassis (6) ou à un chassis intermédiaire (7) du camion par des rotules (19, 19') présentant un jeu par rapport aux moyens de liaison (10, 16), de sorte que les capteurs peuvent effectuer un déplacement axial limité et tourner autor de leur axe longitudinal (1, 2) et autor d'un axe perpendiculaire à celui-ci.

2. Dispositif selon la revendication 1, caractérisé en ce que les moyens de liaison sont deux plaques support (10, 16) fixées à la benne (9).

3. Dispositif selon la revendication 2, caractérisé en ce que les plaques support (10, 16) comportent une ouverture dans laquelle les capteurs (3, 4, 5) peuvent coulisser et tourner et par le fait que la rotule (19) est fixée par des bagues de distance (20) ayant un jeu par rapport aux plaques support, ce qui permet un déplacement axial des capteurs par rapport aux plaques support.

4. Dispositif selon la revendication 2, caractérisé en ce qu'une plaquette (21) fixée à l'une des plaques support (10, 16) s'engage dans une rainure des capteurs (3, 4, 5) afin d'empêcher toute rotation des capteurs autor de leur axe longitudinal par rapport aux plaques support.

5. Dispositif selon la revendication 1, caractérisé en ce qu'il comprend trois capteurs (3, 4, 5) fixés au chassis (6) du camion dans un parallèle à celui de la plaque de base (11) de la benne afin de former un système à trois points d'appui supportant la benne, l'axe de l'un des capteurs (3) étant perpendiculaire à l'axe commun des deux autres capteurs (4, 5).

6. Dispositif selon la revendication 5, caractérisé en ce que les capteurs (3, 4, 5) sont fixés dans un chassis intermédiaire (7) disposé entre le chassis (6) du camion et la benne (9), le chassis intermédiaire appuyant sur le chassis du camion par un élément (8) en matériau élastique.

7. Dispositif selon la revendication 1, caractérisé en ce que la benne est fixée au chassis du camion par une attache (24) ayant un point de rotation (1) sur le chassis et un point de rotation (1') sur la benne, et par le fait qu'il comprend trois capteurs (3, 4, 5) fixés au chassis (6) ou à un chassis intermédiaire (7) dans un plan parallèle à celui de la plaque de base (11) de la benne afin de former un système à trois points d'appui supportant la benne, les axes des capteurs étant parallèles entre eux et perpendiculaires à l'axe longitudinal du camion.

8. Dispositif selon revendication 5 ou la revendication 7, caractérisé en ce qu'un espace (13) est prévu entre la benne et le chassis afin de permettre, à l'endroit du capteur seul (3), une déformation limitée de la benne autor de l'axe du capteur en cas d'une répartition dissymétrique de la charge utile dans la benne.

9. Dispositif selon la revendication 1, caractérisé en ce qu'il comprend quatre capteurs (3, 3', 4, 5) fixés au chassis (6) du camion ou à un chassis intermédiaire (7) dans un plan parallèle à celui de la plaque de base (11) de la benne, les capteurs étant disposés par paires respectivement à l'avant et à l'arrière des chassis et les axes communs des capteurs de chaque paire étant parallèles entre eux et perpendiculaires à l'axe longitudinal du camion.

10. Dispositif selon la revendication 9, caractérisé en ce que les capteurs de l'une des paires sont montés sur une rotule (19') susceptible de tourner dans un logement (18') monté dans un tube fixé au chassis intermédiaire ou au chassis du camion, le tube comprenant deux clavettes (45, 46) susceptibles de coulisser dans deux gorges (47, 48) du logement, des jeux étant prévus entre le logement et le tube pour permettre un déplacement limité de la paire de capteurs selon l'axe longitudinal du camion.

11. Dispositif selon la revendication 9, caractérisé en ce que les axes des capteurs de l'une des paires sont disposés perpendiculairement à l'axe commun de l'autre paire.

12. Dispositif selon la revendication 1, caractérisé en ce que chacun des capteurs (3, 4, 5) délivre un signal de sortie proportionnel aux forces exercées sur lui par le poids de la benne et de la charge utile du camion.

**Patentansprüche**

1. Vorrichtung zur Messung der Nutzlast und der Achsenlast eines Lastwagens, welcher ein Fahrgestell (6) und einen Kipper (9) aufweist, wobei die Messung durch Kraftwandler (3, 3', 4, 5) ausgeführt wird, welche zwischen dem Fahrgestell und dem Kipper angebracht sind, dadurch gekennzeichnet, daß die resultierenden Kräfte, welche durch das Gewicht des Kippers (9) und das der Nutzlast erzeugt werden, den Wandlern (3, 3', 4, 5) durch am Kipper (9) befestigte Verbindungsmittel (10, 16) in welchen die Wandler gleiten und drehen können, übertragen werden, und daß die Wandler (3, 3', 4, 5) durch Kugelgelenke (19, 19'), welche ein Spiel bezüglich der Verbindungsmittel aufweisen, mit dem Fahrgestell (6) oder an einem Zwischengestell (7) des Lastwagens zusammengebaut sind, so daß die Wandler eine begrenzte Verschiebung und eine Rotation um ihre Längsachse (1, 2) und um eine zu dieser senkrechte Achse, ausführen können.

2. Vorrichtung nach Anspruch 1, dadurch gekennzeichnet, daß die Verbindungsmittel zwei am Kipper (9) befestigten Trägerplatten sind.

3. Vorrichtung nach Anspruch 2, dadurch gekennzeichnet, daß die Trägerplatten je eine Öffnung aufweisen in welcher die Wandler (3, 4, 5) gleiten und drehen können, und daß das Kugelgelenk (19) durch Distanzringe (20) befestigt ist, die ein Spiel bezüglich den Trägerplatten aufweisen, so daß eine axiale Verschiebung der Wandler bezüglich der Trägerplatten ermöglicht wird.

4. Vorrichtung nach Anspruch 2, dadurch gekennzeichnet, daß eine an einer der Trägerplatten (10, 16) befestigte Scheibe in eine Nut der Wandler angreift, um jede Drehung der Wandler um ihre Längsachse bezüglich der Trägerplatten zu verhindern.

5. Vorrichtung nach Anspruch 1, dadurch gekennzeichnet, daß sie drei am Fahrgestell (6) des Lastwagens in einer zur Bodenplatte (11) des Kippers parallelen Ebene befestigte Wandler (3, 4, 5) aufweist, um ein Dreipunktlagerungs-System zu bilden, das den Kipper trägt, wobei die Achse des einen Wandlers (3) senkrecht zur gemeinsamen Achse der zwei anderen Wandler (4, 5) steht.

6. Vorrichtung nach Anspruch 5, dadurch gekennzeichnet, daß die Wandler (3, 4, 5) an einem Zwischengestell (7) befestigt sind, welches zwischen dem Fahrgestell (6) des Lastwagens und dem Kipper (9) angebracht ist, wobei das Zwischengestell durch ein elastisches Element (8) auf dem Fahrgestell des Lastwagens abgestützt wird.

7. Vorrichtung nach Anspruch 1, dadurch gekennzeichnet, daß der Kipper durch ein Verbindungsglied (24) mit dem Fahrgestell des Lastwagens verbunden ist, welches ein Gelenk (1) am Fahrgestell und ein Gelenk (1') am Kipper aufweist, wobei die Vorrichtung drei am Fahrgestell (6) oder an einem Zwischengestell (7) in einer zur Bodenplatte (11) des Kippers parallelen Ebene befestigte Wandler (3, 4, 5) aufweist, um ein Dreipunktlagerungs-System zu bilden, welches den Kipper trägt, wobei die Achsen der Wandler parallel zueinander und senkrecht zur Längsachse des Lastwagens stehen.

8. Vorrichtung nach Anspruch 5 oder Anspruch 7, dadurch gekennzeichnet, daß ein Raum (13) zwischen dem Kipper und dem Fahrgestell vorgesehen ist, um an der Stelle des alleinigen Wandlers (3) eine begrenzte Verformung des Kippers um die Achse des Wandlers im Falle einer unsymmetrischen Verteilung der Nutzlast im Kipper zu erlauben.

9. Vorrichtung nach Anspruch 1, dadurch gekennzeichnet, daß sie vier am Fahrgestell (6) des Lastwagens oder an einem Zwischengestell (7) in einer zur Bodenplatte (11) des Kippers parallelen Ebene befestigte Wandler (3, 3', 4, 5) aufweist, und daß die Wandler in Paaren an der Vorderseite, bzw. der Rückseite des Fahrgestells angeordnet sind, wobei die gemeinsamen Achsen der Wandler von jedem Paar parallel zueinander und senkrecht zur Längsachse des Lastwagens stehen.

10. Vorrichtung nach Anspruch 9, dadurch gekennzeichnet, daß die Wandler eines Paares auf einem Kugelgelenk (19') angebracht sind, das in einem Gehäuse (18') drehen kann, welches in einem am Zwischengestell oder am Fahrgestell des Lastwagens befestigten Rohr angebracht ist, und daß das Rohr zwei Keile (45, 46) aufweist, welche in zwei Nuten (47, 48) des Gehäuses gleiten können, wobei Spiel zwischen dem Gehäuse und dem Rohr vorgesehen ist, um eine begrenzte Verschiebung des Wandlerpaares entlang der Längsachse des Lastwagens zu erlauben.

11. Vorrichtung nach Anspruch 9, dadurch gekennzeichnet, daß die Achse der Wandler eines Paares senkrecht zur gemeinsamen Achse des anderen Paares angeordnet sind.

12. Vorrichtung nach Anspruch 1, dadurch gekennzeichnet, daß jeder Wandler (3, 4, 5) ein durch das Gewicht des Kippers und der Nutzlast des Lastwagens auf ihn wirkenden Kräften proportionales Ausgangssignal abgibt.

**Claims**

1. Device for measuring the net weight of the load and of the axle load of a truck comprising a chassis (6) and a tipping bucket (9), said measurement being carried out by force transducers (3, 3', 4, 5) which are mounted between the chassis and the tipping bucket, characterized in that the forces resulting from the weight of the tipping bucket (9) and of the net weight of the load are transmitted to the transducers (3, 3', 4, 5) by connecting means (10, 16) secured to the tipping bucket (9) in which connecting means the transducers are capable to slide and rotate and in that the transducers (3, 3', 4, 5) are assembled to the chassis (6) or to an intermediate chassis (7) of the truck by knee-joints (19, 19') having a play with respect to the connecting means (10, 16) so that the transducers are capable of executing a limited axial displacement and of rotating about their longitudinal axis (1, 2) and about an axis normal to the latter.

2. Device according to claim 1, characterized in that the connecting means are two supporting plates (10, 16) secured to the tipping bucket (9).

3. Device according to claim 2, characterized in that the supporting plates (10, 16) comprise an opening in which the transducers (3, 4, 5) are capable to slide and rotate and in that the knee-joint (19) is secured by means of spacer rings (20) having a play with respect to the supporting plates which permits an axial displacement of the transducers with respect to the supporting plates.

4. Device according to claim 2, characterized in that a plaquette (21) secured to one of the supporting plates (10, 16) engages within a groove of the transducers (3, 4, 5) in order to prevent any rotation of the transducers about their longitudinal axis with respect to the supporting plates.

5. Device according to claim 1, characterized in that it comprises three transducers (3, 4, 5) secured to the chassis (6) of the truck in a plane parallel to the one of the base plate (11) of the tipping bucket in order to form a three-point-bearing system supporting the tipping bucket, the axis of one of the transducers (3) being normal to the common axis of the two other transducers (4, 5).

6. Device according to claim 5, characterized in that the transducers (3, 4, 5) are secured to an intermediate chassis (67) arranged between the chassis (6) of the truck and the tipping bucket (9), the intermediate chassis resting on the chassis of the truck by means of a resilient element (8) provided in the space between.

7. Device according to claim 1, characterized in that the tipping bucket is secured to the chassis of the truck by a link (24) having a joint (1) on the chassis and a joint (1') on the tipping bucket and in that it comprises three transducers (3, 4, 5) secured to the chassis (6) or to an intermediate chassis (7) in a plane parallel to the one of the base plate (11) of the tipping bucket in order to form a three-point-bearing system supporting the tipping bucket, the axis of the transducers being parallel to each other and normal to the longitudinal axis of the truck.

8. Device according to claim 5 or claim 7, characterized in that a gap (13) is provided between the tipping bucket and the chassis for permitting, at the place of the sole transducer (3), a limited deformation of the tipping bucket about the axis of the transducer when the useful load is asymmetrically distributed into the tipping bucket.

9. Device according to claim 1, comprising four transducers (3, 3', 4, 5) secured to the chassis (6) of the truck or to an intermediate chassis (7) in a plane parallel to the one of the base plate (11) of the tipping bucket, the transducers being arranged by pairs, respectively at the front and at the rear of the chassis and the common axis of the transducers of each pair being parallel to each other and normal to the longitudinal axis of the truck.

10. Device according to claim 9, characterized in that the transducers of one of the pairs are mounted on a knee-joint (19') capable to rotate in a housing (18') provided in a tube secured to the intermediate chassis or to the chassis of the truck, the tube comprising two keys (45, 46) capable to slide in two grooves (47, 48) of the housing, plays being provided between the housing and the tube for permitting a limited displacement of the pair of transducers according to the longitudinal axis of the truck.

11. Device according to claim 9, characterized in that the axis of the transducers of one of the pairs are arranged perpendicularly to the common axis of the other pair.

12. Device according to claim 1, characterized in that each transducer (3, 4, 5) delivers an output signal proportional to the forces exerted upon it by the weight of the tipping bucket and of the useful load of the truck.

FIG.1

# FIG.2

# FIG.3

11

15

9

13

7

5

16

8

6

FIG.4

11

9

12,15

10,16

10,16

18

17

21

19

1,2

20    20

3,4,5

17

7

8

18

6

FIG.11

47    45

18'

50

19'

3, 3'

17'

50

48    46

## FIG.5

Z ← ————————————— (Y)

3

5

4

X

## FIG.6

P/2 ↓  P ↑  P/2 ↓

## FIG.7

23

Z →

1'

2

22

24

1

## FIG.9

+ Av ↑

P3 ↓

+ AH ↑

P2+3 ↓

3

9

1

6+7

2

L1

L2

L3

25

26

FIG.8

0 054 000

# FIG.10